Europäisches Patentamt

European Patent Office

Office européen des brevets

(11) Veröffentlichungsnummer: **0 201 699**
**A2**

## (12) EUROPÄISCHE PATENTANMELDUNG

(21) Anmeldenummer: **86104133.3**

(22) Anmeldetag: **25.03.86**

(51) Int. Cl.⁴: **G 11 B 15/675**
**G 11 B 15/17**

(30) Priorität: **11.05.85 DE 3517124**

(43) Veröffentlichungstag der Anmeldung:
**20.11.86 Patentblatt 86/47**

(84) Benannte Vertragsstaaten:
**CH DE FR GB IT LI**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Hartig, Heinz**
**Bahnhofstrasse 41**
**D-8500 Nuernberg(DE)**

(54) Sperrvorrichtung zur Vermeidung des Falscheinlegens einer Videokassette.

(57) Beschrieben wird eine Vorrichtung zur Vermeidung des Falscheinlegens einer Videokassette in einem Video-Magnetbandgerät, wobei die Kassette über eine Schlitzöffnung in das Geräte-Innere einführbar ist, und die Geräteöffnung ein Schwenkteil aufweist das sicherstellt, daß die Kassette nur in einer bestimmten Lage die Geräteöffnung passieren kann.

FIG.1

EP 0 201 699 A2

- 1 -

SPERRVORRICHTUNG ZUR VERMEIDUNG DES FALSCH-
EINLEGENS EINER VIDEOKASSETTE

BESCHREIBUNG

Es ist bekannt, daß Videokassetten für bestimmte Video-Heimgerätesysteme nur in einer vorgegebenen Lage in das Geräte-Innere eingeführt werden sollen. Wird die Kassette in eine Schlitzöffnung eines Gerätes eingeschoben, so kann erst im Inneren des Gerätes festgestellt werden, ob sich die Kassette in der für das Gerät richtigen Lage befindet. Ist sie falsch eingelegt, so muß sie aus dem Gerät herausgenommen und z. B. gewendet werden, um sie dann erneut wieder in die Kassettenöffnung einzuführen. Zur Erkennung, ob eine Kassette in der richtigen Lage in ein Gerät eingeführt ist, sind im Inneren des Gerätes Vorkehrungen getroffen, die ein entsprechendes Abtasten der Kassette ermöglichen, um festzustellen, ob eine Kassette in der erforderlichen Lage in das Gerät eingeschoben wurde und die Arbeits- und Band-Abtastelemente in Funktionslage gebracht werden können. Ein derartiger Vorgang zur richtigen Lagenermittlung einer Kassette im Gerät ist aufwendig und erfordert bei Fehllage den erneuten Zugriff zur Kassette.

Aufgabe der Erfindung ist es daher, diesen Nachteil zu beseitigen und eine Vorrichtung zur Vermeidung des Falscheinlegens einer Videokassette in einem Video-Magnetbandgerät zu schaffen, die es bereits verhindert, daß die Kassette in einer falschen Lage die Kassettenöffnung des Gerätes passiert.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1    ist eine perspektivische Teildarstellung eines Videogerätes mit einer Schlitzöffnung zum Einführen einer Kassette und einer Vorrichtung zur Vermeidung des Falscheinlegens der Kassette,

- 3 -                    0201699

Fig. 2    ist eine Draufsicht auf eine vergrößerte
          Darstellung der Vorrichtung zur Vermeidung des Falscheinlegens der Kassette in
          einem Videogerät im Schnitt B-B der Fig.2
          und

Fig. 3    ist eine Seitenansicht der Figur 2 im
          Schnitt A-A.

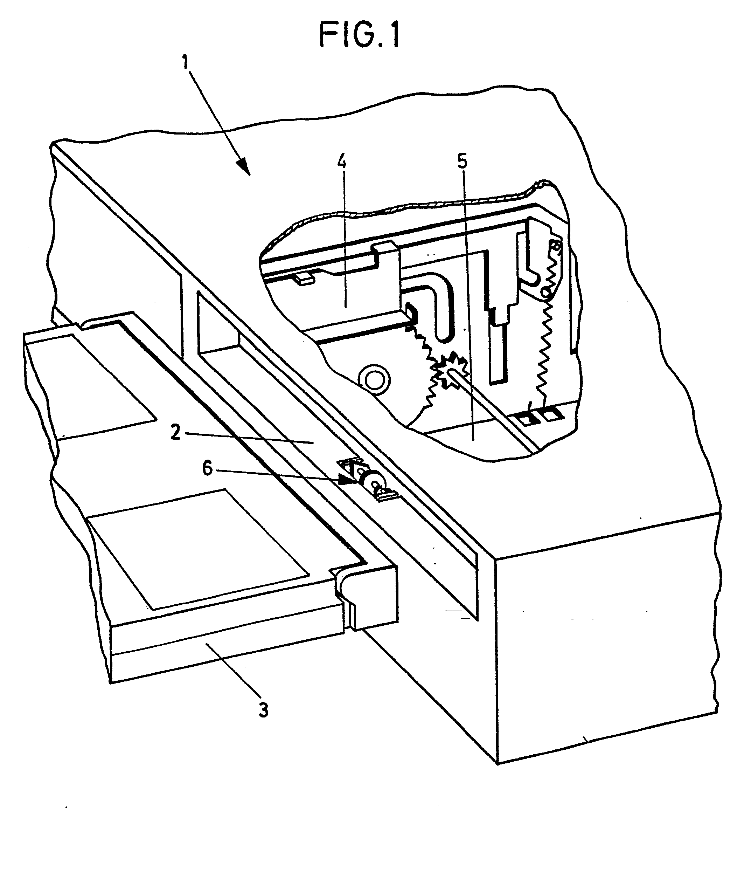

Die Figur 1 zeigt eine Teilansicht eines Video-Magnetbandgerätes 1, das eine Schlitzöffnung 2 aufweist, in
die eine Video-Kassette 3 einzuschieben ist. Nach Einschieben einer Kassette in das Gerät wird diese automatisch von einem Schlitten 4 erfaßt  und in das Innere
des Gerätes hineingezogen und auf eine Antriebsebene
in einen Kassettenschacht 5 abgesenkt. Zur Verminderung
von Funktionsstörungen ist das Falscheinlegen der Kassette in das Gerät zu vermeiden. Hierzu ist eine Sperrvorrichtung 6 in der Schlitzöffnung 2 des Gerätes 1
vorgesehen.

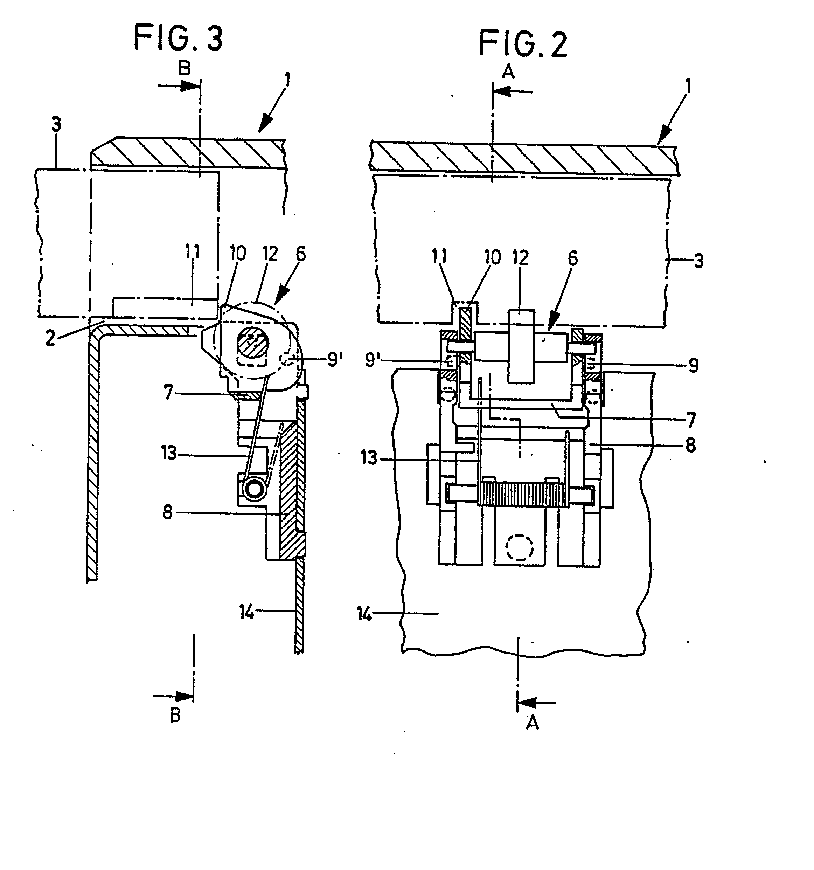

Wie aus Figur 2 und 3 näher zu erkennen ist, besteht
die Sperrvorrichtung 6 im wesentlichen aus einem Schwenkteil, das einen U-förmigen Rahmen 7 aufweist, der in
einem Träger 8 mittels zweier Lagerstellen 9 und 9'
schwenkbar gelagert ist. Der Rahmen 7 weist an einem der
beiden Schenkel eine Sperrnase 10 auf. Die Sperrnase
verhindert das Falscheinlegen einer Kassette in ein
Gerät, da sie in die Kassettenschlitzöffnung des Videogerätes hineinragt und der Rahmen 7 sich beim Ausüben

- 4 -

eines Gegendrucks auf die Sperrnase nicht aus der Öffnung 2 wegschwenken läßt. Wird jedoch die Kassette in
der für das Gerät funktionsrichtigen Lage in die
Schlitzöffnung eingeschoben, so trifft eine bestimmte
Ausklinkung 11 an der Kassette 3 auf die Sperrnase 10,
und die Kassette kann wenigstens teilweise in das
Geräte-Innere eingeschoben werden. Während des teilweisen Einschiebens der Kassette in das Gerät, gleitet
die Kassette auf einem der Sperrvorrichtung zugeordneten Gleitteil 12 auf und die Sperrvorrichtung wird
in das Geräte-Innere entgegen der Kraft einer Schenkelfeder 13 abgeschwenkt. Das Gleitteil ist als Rolle ausgeführt und mittels einer Achse im U-förmigen Rahmen 7
gelagert. Durch die entsprechende geometrische Zuordnung der Rolle sowie der Sperrnase und des Rahmens zu
der Lagerstelle des Rahmens im Träger 8, ist gewährleistet, daß die Sperrnase nur über das Auflaufen der
Kassette auf die Rolle weggeschwenkt werden kann.
Hiermit ist sichergestellt, daß durch die Sperrvorrichtung das Falscheinlegen einer Kassette verhindert wird,
unabhängig von welcher Art und Ausführung die Kassette
ist. Die Sperrvorrichtung ist an der Innenwand 14 des
Kassettenschachtes 5 befestigt.

# SPERRVORRICHTUNG ZUR VERMEIDUNG DES FALSCH-
# EINLEGENS EINER VIDEOKASSETTE

## PATENTANSPRÜCHE

1. Sperrvorrichtung zur Vermeidung des Falscheinlegens einer Videokassette in einem Video-Magnetbandgerät, geeignet für Kassetten eines bestimmten Video-Heimgerätesystems, wobei die Kassette über eine allseitig umfaßte Schlitzöffnung in das Geräteinnere einführbar ist, d a d u r c h  g e k e n n - z e i c h n e t , daß im unteren Bereich der Schlitzöffnung (2) ein Schwenkteil (7, 10, 12) in die Kassettenöffnung teilweise hineinragt, daß das Schwenkteil aus einem unter Federspannung stehenden U-förmigen Rahmen (7) besteht, daß der Rahmen eine Sperrnase (10) aufweist, daß dem Rahmen ein Gleitteil (12) zugeordnet ist, das gegenüber der Sperrnase auf der Kassetteneinführseite zurückgesetzt ist, und daß die Nase (10) in eine bestimmte Ausklinkung (11) an der Kassette (3) hineingreift, und hierdurch über das Gleitteil (12) das Schwenkteil bei Einführung der Kassette in das Geräte-Innere versenkbar ist.

2. Sperrvorrichtung nach Anspruch 1, d a - d u r c h   g e k e n n z e i c h n e t ,   daß das Gleitteil (12) als Rolle ausgebildet ist.

3. Sperrvorrichtung nach Anspruch 1 und 2, d a d u r c h   g e k e n n z e i c h n e t ,   daß der Rahmen (7) beidseitig mittels Lagerzapfen (9, 9') in  einem Träger (8) gelagert ist.

FIG.1

Reg. 1998
0201699

FIG. 3

FIG. 2